# FASCICULE DE BREVET EUROPEEN

(11) **EP 1 075 411 B1**
(45) Date de publication et mention de la délivrance du brevet: **14.07.2004**
(21) Numéro de dépôt: 00907711.6
(22) Date de dépôt: 24.02.2000
(51) Int. Cl.: B62D 5/06

(54) **PROCEDE DE MONTAGE D'UN CLAPET ANTI-RETOUR DANS UN SYSTEME HYDRAULIQUE, EN PARTICULIER UN SYSTEME DE DIRECTION ASSISTEE POUR VEHICULE AUTOMBILE**
VERFAHREN ZUR MONTAGE EINES RÜCKSCHLAGVENTILS IN EINEM HYDRAULISCHEN SYSTEM, INSBESONDERE EINE SERVOLENKUNG EINES KRAFTFAHRZEUGES
METHOD FOR MOUNTING A NON-RETURN VALVE IN A HYDRAULIC SYSTEM, IN PARTICULAR A POWER STEERING SYSTEM FOR A MOTOR VEHICLE

(30) Priorité: 26.02.1999 FR 9902406
(43) Date de publication de la demande: 14.02.2001
(73) Titulaire: HUTCHINSON, 75008 Paris (FR)
(72) Inventeur: DROUET, Philippe, F-45200 Amilly (FR)
(74) Mandataire: Doireau, Marc
(86) Numéro de dépôt international: PCT/FR2000/000458
(87) Numéro de publication internationale: WO 2000/050289

(56) Documents cités:
- DE-C- 4 323 179
- FR-A- 2 755 743
- GB-A- 2 051 714
- US-A- 5 531 287

## Description

L'invention concerne un procédé de montage d'un clapet anti-retour dans un système hydraulique, en particulier un système de direction assistée pour véhicule automobile.

D'une manière générale, un système de direction assistée comprend un ensemble d'organes, notamment une pompe alimentée à partir d'un réservoir d'huile, une servo-valve de commande du vérin d'un système à crémaillère, etc., ces organes étant sélectivement reliés par des conduits de liaison souples et par des conduits de liaison rigides.

Dans un tel système de direction assistée, il est connu d'interposer un clapet anti-retour entre la pompe et la servo-valve, c'est-à-dire dans la partie haute pression du système, pour annuler toute contre-pression susceptible de générer des vibrations nuisibles au confort dans l'habitacle du véhicule et de provoquer un à-coup au niveau du volant. Une telle contre-pression peut survenir par suite de l'état défectueux du revêtement de la route par exemple.

Dans les documents GB-A-2 051 714 et US-A-4 673 051, le montage du clapet nécessite l'usinage de pièces et fait intervenir des opérations de vissage.

Pour simplifier le montage du clapet et éviter d'avoir recours à ces pièces intermédiaires il est connu du document FR-A-2 755 743, qui sert de base pour la présentation en deux parties de la revendication 1, de monter le clapet anti-retour à l'intérieur d'un tube de liaison rigide. Plus précisément, le tube comporte sur sa longueur et intérieurement un logement de forme ajustée pour y recevoir le clapet.

Le but de l'Invention est d'envisager un mode de montage du clapet different de celui décrit dans ce dernier document tout en évitant d'avoir recours à de nombreuses pièces intermédiaires voire même à les supprimer.

A cet effet, l'invention propose un procédé de montage d'un clapet anti-retour selon la revendication 1.

Le procédé consiste à fixer directement l'élément tubulaire et le clapet par soudage, par brasage ou par collage, c'est-à-dire par tout moyen ne nécessitant aucune pièce intermédiaire usinée.

D'autres avantages de l'invention sont decrits dans les revendications 2 à 6.

L'invention concerne également un système de direction assistée selon la revendication 7.

Le procédé selon l'invention présente de nombreux avantages, notamment une simplicité de montage et un coût de fabrication peu élevé.

D'autres avantages, caractéristiques et détails de l'invention ressortiront du complément de description qui va suivre en référence aux dessins annexés, donnés uniquement à titre d'exemple et dans lesquels :
- la figure 1 est une vue schématique d'un système hydraulique de direction assistée pour véhicule automobile,
- la figure 2 est une vue en coupe partielle pour illustrer un procédé de montage d'un clapet anti-retour selon l'invention,
- la figure 3 est une vue en coupe partielle d'une variante du procédé de montage illustré à la figure 2, et
- la figure 4 est une vue en coupe partielle pour illustrer le raccordement du clapet de la figure 3 à un système hydraulique du type de celui représenté à la figure 1.

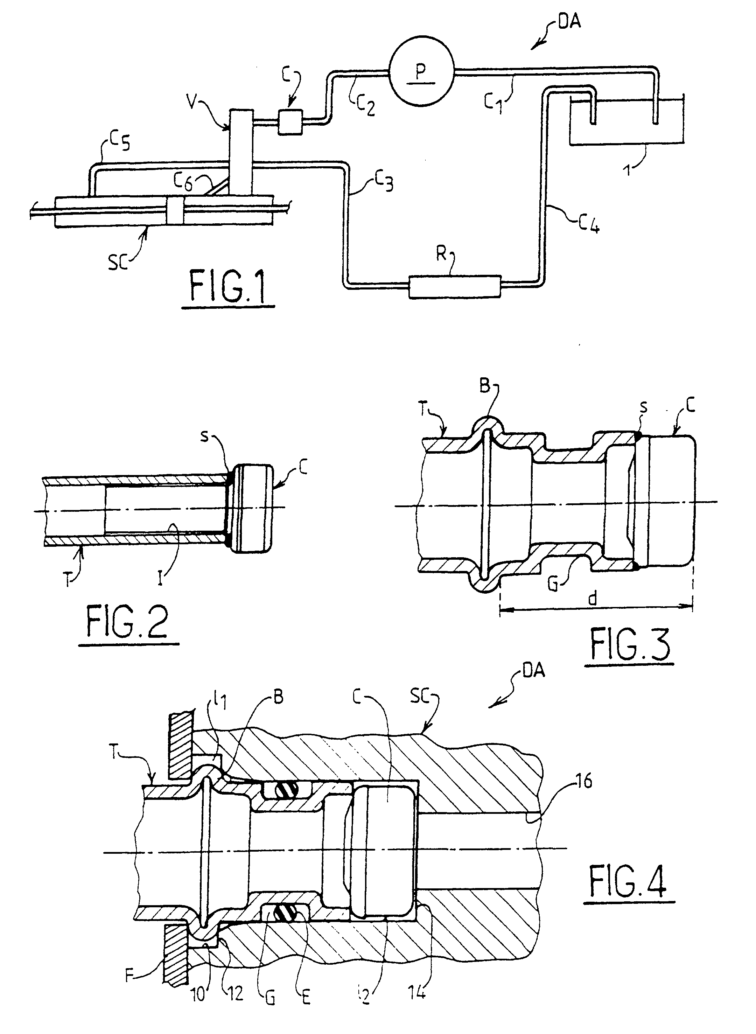

Un exemple de système hydraulique de direction assistée est illustré schématiquement à la figure 1. Ce système DA comprend notamment un réservoir d'huile 1, une pompe P, une servo-valve V de commande d'un système à crémaillère SC et éventuellement un refroidisseur R. L'entrée de la pompe P est reliée par un conduit d'alimentation C1 à basse pression au réservoir d'huile 1, alors que sa sortie est reliée à une entrée de la servo-valve V par un conduit d'alimentation C2 à haute pression. Un conduit de retour C3 à basse pression relie une sortie de la servo-valve V à une entrée du refroidisseur R dont la sortie retourne par un conduit de retour C4 à basse pression au réservoir d'huile 1. Enfin, deux conduits d'alimentation et de retour C5 et C6 à haute pression relient le système à crémaillère C et la servo-valve V. Un clapet anti-retour C est interposé dans le conduit à haute pression C2 qui relie la pompe P et la servo-valve V pour les raisons explicitées en préambule.

L'invention concerne principalement un procédé de montage du clapet anti-retour C au niveau du conduit d'alimentation C2 à haute pression, sachant que ce conduit C2 peut être constitué de plusieurs tubes rigides et tuyaux souples.

Dans l'exemple illustré sur la figure 2, le clapet C est fixé à l'extrémité d'un élément tubulaire rigide ou insert I, par collage, brasage ou soudage, comme indiqué par la référence s. Cet insert I est ensuite raccordé de manière étanche au conduit C2 qui inclut un tube rigide T par exemple.

Cette opération de raccordement entre l'insert I et le tube T peut-être effectuée de deux manières :
- par emmanchement à force de l'insert I, par son extrémité opposée à celle du clapet C, à l'intérieur du tube T, ou
- par une opération de roulage du tube T sur l'insert I, qui en réduisant le diamètre du tube T, se bloquera contre l'insert I.

Dans le cas d'un emmanchement à force, le tube T qui reçoit l'insert I n'est pas nécessairement rigide. Il peut être constitué par un tuyau semi-rigide ou souple.

Selon un second exemple de montage illustré sur la figure 3, le clapet C est directement fixé à une extrémité d'un tube rigide T qui fait partie du conduit C2 sans utiliser un insert intermédiaire.

Sur la figure 4, on a illustré un mode de raccordement étanche entre le clapet C de la figure 3 et un système de direction assistée DA du type de celui illustré sur la figure 1. Dans ce cas, le clapet C est directement raccordé à un organe du système de direction assistée DA.

Plus précisément, la partie d'extrémité du tube T, à laquelle le clapet C est fixé, vient se loger dans un évidemment 10 usiné dans le corps de la crémaillère SC du système de direction assistée DA. L'évidement 10 débouche dans un conduit ou cavité 16 ménagé à l'intérieur du corps de la crémaillère CR pour assurer la transmission du fluide.

A cet effet, le tube rigide T qui supporte le clapet C a été usiné ou déformé de manière à présenter au moins un bossage périphérique B et une gorge périphérique G qui reçoit un joint d'étanchéité E.

L'évidement 10 présente deux réductions de diamètre intérieur ayant des profondeurs différentes et qui délimitent deux épaulements annulaires 12 et 14.

L'évidement 10 se scinde ainsi :
- en un premier logement l₁ qui débouche à l'extérieur et dont le diamètre intérieur est légèrement supérieur au diamètre externe du bossage B du tube T, et
- en un second logement l₂ qui s'étend entre les deux épaulements 12 et 14 sur une longueur correspondant sensiblement à la distance d (figure 3) qui sépare le bossage B du tube T et la face arrière du clapet C, et dont le diamètre intérieur est légèrement supérieur au diamètre extérieur du tube T ou du clapet C.

Ainsi, lors du montage, la partie d'extrémité du tube T (figure 3) est ajustée glissant dans l'évidement 10 de manière à ce que le clapet C vienne se positionner dans le fond du logement l₂ au voisinage immédiat de l'épaulement 14 et en regard de la cavité 16, et que le bossage B du tube T vienne en appui sur l'épaulement 12.

La partie d'extrémité du tube T peut être ensuite bloquée en translation au moyen d'une bride F par exemple qui est vissée sur le corps de la crémaillère SC et qui vient prendre appui sur le bossage B du tube T.

Ainsi, le fluide peut s'écouler entre le tube T et la cavité au travers du clapet C mais pas en sens inverse.

Bien entendu, l'invention ne se limite pas au montage d'un clapet anti-retour dans un système hydraulique de direction assistée pour véhicule automobile. En effet, l'invention s'applique au montage d'un clapet dans tout système hydraulique qui nécessite l'écoulement d'un fluide dans un sens unique.

## Revendications

1. Procédé de montage d'un clapet anti-retour (C) dans un système hydraulique, en particulier un système de direction assistée (DA) pour véhicule automobile, **caractérisé en ce qu'**il consiste à fixer le clapet (C) à une extrémité d'un élément tubulaire rigide (I, T) **par collage, soudage ou brasage**, et à raccorder de manière étanche d'une part l'élément tubulaire (I, T) et le clapet (C), et d'autre part l'élément tubulaire (I, T) et le système hydraulique (DA).

2. Procédé selon la revendication 1, **caractérisé en ce qu'**il consiste à raccorder de manière étanche l'extrémité libre de l'élément tubulaire (I) par emmanchement à force à l'intérieur d'un conduit du système hydraulique.

3. Procédé selon la revendication 2, **caractérisé en ce qu'**il consiste à emmancher à force l'élément tubulaire (I) à l'intérieur d'un tube rigide ou d'un tuyau souple (T) formant ledit conduit.

4. Procédé selon la revendication 1, **caractérisé en ce qu'**il consiste à raccorder de manière étanche l'extrémité libre de l'élément tubulaire (I) pour roulage à l'intérieur d'un tube rigide formant un conduit du système hydraulique.

5. Procédé selon l'une des revendications précédentes, **caractérisé en ce qu'**il consiste à raccorder de manière étanche le clapet (C) directement à un organe du système hydraulique.

6. Procédé selon la revendication 5, **caractérisé en ce qu'**il consiste à monter glissant la partie d'extrémité à l'élément tubulaire rigide (I, T) munie d'un clapet (C) à l'intérieur d'un évidement (10) ménagé dans l'organe (SC) du système hydraulique.

7. Système hydraulique, en particulier un système hydraulique de direction assistée (DA) pour véhicule automobile, comprenant notamment un réservoir d'huile (T), une pompe (P), une servo-valve (V), un système à crémaillère (SC), un clapet anti-retour (C), et des conduits de liaison (C1, C2, ...) entre ces différents éléments, **caractérisé en ce que** le clapet (C) est fixé à l'extrémité de l'un des conduits précités par collage, soudage ou brasage et que ce conduit est raccordé par une liaison étanche d'une part audit clapet(c) et d'autre part au système hydraulique.

## Patentansprüche

1. Verfahren zum Anbringen eines Rückschlagventils (C) in einem Hydrauliksystem, insbesondere einem Lenkunterstützungssystem (DA) für ein Kraftfahrzeug, **dadurch gekennzeichnet, dass** es in einem Anbringen des Ventils (C) an einem Ende eines steifen Rohrteils (I, T) durch Kleben, Schweißen oder Löten und in einem in abdichtender Weise Anschließen einerseits des Rohrteils (I, T) und des Ventils (C) und andererseits des Rohrteils (I, T) und des Hydrauliksystems (DA) besteht

2. Verfahren gemäß Anspruch 1, **dadurch gekennzeichnet, dass** es in einem in abdichtender Weise Anschließen des freien Endes des Rohrteils (I) an das Innere einer Leitung des Hydrauliksystems durch Einpressen besteht

3. Verfahren gemäß Anspruch 2, **dadurch gekennzeichnet, dass** es in einem Einpressen des Rohrteils (I) an das Innere eines die Leitung bildenden steifen Rohrs oder weichen Schlauchs (T) besteht

4. Verfahren gemäß Anspruch 1, **dadurch gekennzeichnet, dass** es in einem in abdichtender Weise Anschließen eines freien Endes des Rohrteils (I) an das innere eines eine Leitung des Hydrauliksystems bildenden steifen Rohrs durch Rollformen besteht.

5. Verfahren gemäß einem der vorhergehenden Ansprüche, **dadurch gekennzeichnet, dass** es in einem in abdichtender Weise Anschließen des Ventils (C) direkt an eine Einrichtung des Hydrauliksystems besteht

6. Verfahren gemäß Anspruch 5, **dadurch gekennzeichnet, dass** es in einem gleitenden Anbringen des Endteils an dem steifen Rohrteil (I, T), welches mit einem Ventil (C) versehen ist, in dem Inneren einer in der Einrichtung (SC) des Hydrauliksystems herbeigeführten Aussparung (10) besteht.

7. Hydrauliksystem, insbesondere ein Lenkunterstützungshydrauliksystem (DA) für ein Kraftfahrzeug, umfassend insbesondere einen Ölbehälter (T), eine Pumpe (P), ein Servoventil (V), ein Zahnstangensystem (SC), ein Rückschlagventil (C) und Verbindungsleitungen (C1, C2, ...) zwischen diesen verschiedenen Teilen, **dadurch gekennzeichnet, dass** das Ventil (C) an dem Ende einer der Leitungen durch Kleben, Schweißen oder Löten angebracht ist, und dass diese Leitung durch eine abdichtende Verbindung einerseits an dem Ventil (C) und andererseits an dem Hydrauliksystem angeschlossen ist.

## Claims

1. Process for mounting a non-return valve (C) in an hydraulic system, in particular a power-assisted steering system (DA) for a motor vehicle, **characterized in that** it consists of attaching the valve (C) to one end of a rigid tubular element (I, T) by gluing, welding or brazing, and of connecting in a leakproof manner on the one hand the tubular element (I, T) and the valve (C), and on the other hand the tubular element (I, T) and the hydraulic system (DA).

2. Process according to claim 1, **characterized in that** it consists of connecting in a leakproof manner the free end of the tubular element (I) by force-fitting inside a conduit of the hydraulic system.

3. Process according to claim 2, **characterized in that** it consists of force-fitting the tubular element (I) inside a rigid tube or a flexible hose (T) forming the said conduit.

4. Process according to claim 1, **characterized in that** it consists of connecting in a leakproof manner the free end of the tubular element (I) by rolling inside a rigid tube forming a conduit of a hydraulic system.

5. Process according to one of the preceding claims, **characterized in that** it consists of connecting in a leakproof manner the valve (C) directly to a component of the hydraulic system.

6. Process according to claim 5, **characterized in that** it consists of mounting slidingly the end part of the rigid tubular element (I, T) provided with a valve (C) inside a recess (10) provided inside the component (SC) of the hydraulic system.

7. Hydraulic system, in particular a power-assisted steering hydraulic system (DA) for a motor vehicle, comprising in particular an oil reservoir (T), a pump (P), a servo-valve (V), a rack system (SC), a non-return valve (C) and connecting conduits (C1, C2 etc.) between these different elements, **characterized in that** the valve (C) is attached to the end of one of the aforementioned conduits by gluing, welding or brazing, and that this conduit is connected by a leakproof connection on the one hand to the said valve (C) and on the other hand to the hydraulic system.
